Europäisches Patentamt

(19) European Patent Office

Office européen des brevets

(11) Publication number: **0 135 284**
**A2**

(12) **EUROPEAN PATENT APPLICATION**

(21) Application number: **84304775.4**

(22) Date of filing: **12.07.84**

(51) Int. Cl.⁴: **F 16 K 1/226**

(30) Priority: **01.08.83 US 518924**

(43) Date of publication of application:
**27.03.85 Bulletin 85/13**

(84) Designated Contracting States:
**DE FR GB IT NL**

(71) Applicant: **KEYSTONE INTERNATIONAL INC.**
**9600 West Gulf Bank Drive**
**Houston Texas 77040(US)**

(72) Inventor: **Scobie, William Bryce**
**17111 Jane Lynn Lane**
**Houston Texas 77070(US)**

(74) Representative: **Allam, Peter Clerk et al,**
**LLOYD WISE, TREGEAR & CO. Norman House 105-109**
**Strand**
**London WC2R 0AE(GB)**

(54) **Valve.**

(57) A valve, particularly a butterfly valve, having an elastomeric seat in which the axial compression on the seat can be varied in predetermined, stepwise fashion so as to result in a predetermined radial inward movement of the seat, the valve having provision for applying the axial compressive forces in a generally uniform manner around the periphery of the seat, the elastomeric seat having the capability of withstanding pressures in excess of 1000 psi.

Croydon Printing Company Ltd.

TITLE:    <u>VALVE</u>                    0135284

### 1. Field of the Invention

The present invention relates to fluid control valves and more particularly to a valve having a pivotable valve closure element such as a butterfly or disk valve.

### 2. Prior Art

Valves employing pivotable closure elements, such as butterfly valves, have found wide use in industry for fluid handling and control.  In particular, butterfly valves employing elastomeric seats such as seats made from rubber or similar materials are extensively used in environments which are not deleterious to the elastomeric material of the seat and where the pressure is relatively low, e.g. 250 psi or less. Indeed, because of the inherent tendency of elastomeric materials such as rubber to extrude under high pressures, butterfly valves employing elastomeric seats are generally always used in low pressure service.  Butterfly valves designed for high pressure service, e.g. from 250 to 1500 psi, normally employ metal seats or non-elastomeric polymeric materials such as, for example, polytetrafluoroethylene.  However, butterfly valves employing metallic seats are more expensive to manufacture primarily because of the fact that they depend on metal-to-metal seat-disk interference for sealing which necessitates relatively careful machining to achieve the desired tolerances or they require relatively elaborate biasing mechanisms to urge the seat into tight sealing engagement with the disk.  Valves employing seats of generally inelastic polymeric materials such as polytetrafluoroethylene are also more expensive than rubber seated or elastomeric seated valves and, additionally, must be designed to accommodate the cold flow tendencies of such polymeric materials.

The elastomeric seats employed in butterfly valves are generally molded such that the inside diameter of the radially inner surface of the seat which forms the seating surface for the sealing surface formed on the periphery of the disk is smaller than the diameter of the disk such than when the valve is in the closed position, there is sufficient interference between the sealing surface of the disk and the seating surface on the valve seat to ensure a fluid-tight seal. It is common to simply size the seat relative to the disk to ensure that there is sufficient interference to hold up to a given pressure range. However, due to the inherent inability to mold elastomeric seats with a high degree of accuracy or precision, the exact amount of disk-seat interference can only realistically be controlled by machining of the disk edge or the rubber seat.

It is known in large size butterfly valves, e.g. 30 inches in diameter and greater, utilizing elastomeric seats, to size the seat such that it has an internal diameter which is greater than the diameter of the disk. In such large size valves, in order to provide interference fit between the disk and the seat when the valve is in the closed position, the seat is axially compressed around its circumference with a plurality of individually adjustable ring segments, the segments being sequentially tightened to force radially inward expansion of the seat to bring the seating surface of the seat and the sealing surface or disk edge into sealing engagement with one another. Typically, the ring segments are secured to a portion of the valve body by means of a screw which is received in a tapped bore in the valve body, the valve seat being squeezed between a pocket in the valve body and the ring segment as the screw is threaded into the tapped bore. It will be appreciated that in such arrangements, the ring segments and their associated screws provide a non-discreet, continuous range of compressive forces. Moreover, since each segment is adjusted individually, the axial compressive forces applied on the seat to achieve the desired disk-seat interference is usually not uniformly distributed around the periphery of the seat. The ring segments are simply tightened to a degree sufficient to provide disk-seat interference sufficient to provide a fluid-tight seal while keeping the torque required to rotate the disk within acceptable limits.

0135284

3-

## Summary of the Invention

It is therefore an object of the present invention to provide an improved rotary valve.

Another object of the present invention is to provide an improved butterfly valve utilizing a valve seat made from an elastomeric seat material which can withstand elevated pressures of from about 250 to about 1500 psi.

Still a further object of the present invention is to provide an improved butterfly valve wherein the amount of disk-seat interference can be changed in discreet, predetermined steps.

Yet another object of the present invention is to provide a butterfly valve which can be converted from a low pressure rated to a high pressure rated valve without changing the valve seat construction.

The above and other objects of the present invention will become apparent from the drawings, the description given herein and the appended claims.

The valve of the illustrated embodiment of the present invention comprises a valve body having a flow passage therethrough and an annular seat recess or pocket in surrounding relationship to the flow passage. The seat recess has an axially facing abutment surface and a cylindrical surface, the cylindrical surface terminating on one end at the abutment surface and on the other end at a counterbore formed in one end of the valve body. Pivotally mounted within the valve body is a valve closure element, e.g. a disk, to control the flow of fluid through the flow passage, the valve closure element having a sealing surface thereon. An annular, elastomeric seat member having a radially inward seating surface is positioned in the seat recess. The seat member has a generally radially outwardly opening annular groove in which is disposed a rigid, preferably metallic, annular support member, the support member having a shape complementary to the groove and therefore substantially filling the groove. Removably secured to the valve body is an annular seat retention means, the seat member being disposed between the abutment surface and the seat retention means. The valve further includes means operatively associated with the

0135284

seat retention means for applying axial compressive forces on the seat member in discreet steps. The axial compressive forces are applied substantially uniformly around the periphery of the seat member such that a substantially uniform, predetermined radial inward movement of the seat is effected resulting in a predetermined degree of sealing interference between the sealing surface on the valve closure element and the seating surface on the seat member.

-6- 0135284

Brief Description of the Drawings

The invention may be more fully understood by reference to the following description of the preferred embodiment in conjunction with the drawings wherein:

Fig. 1 is a vertical view, partly in section, of a butterfly valve constructed in accordance with the present invention;

Fig. 2 is an elevational view of the butterfly valve of Fig. 1;

Fig. 3 is an enlarged, fragmentary view, partly in section, of the valve body, the seat, the disk and the seat retaining ring prior to the seat retention ring being secured to the valve body;

Fig. 4 is a view similar to Fig. 1 showing the seat retaining ring secured to the valve body;

Fig. 5 is a view similar to Fig. 4 showing a spacer between the valve body and the seat retaining ring;

Fig. 6 is a view similar to Fig. 5 showing a spacer between the seat retaining ring and the valve body and a spacer between the abutment surface in the valve body and the seat member.

## Description of the Preferred Embodiment

While the invention will be described with particular reference to a butterfly or disk valve, it is to be understood that the present invention finds application in other valves as well.

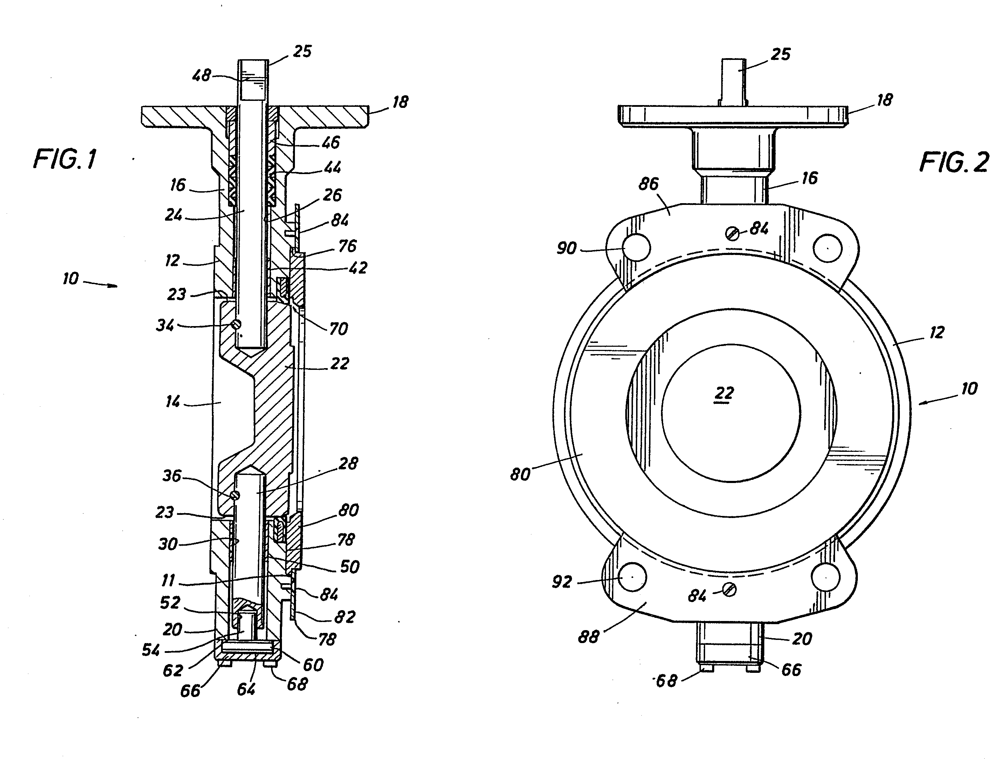

Referring first to Fig. 1, there is shown a butterfly valve 10 having a generally annular body 12 with a fluid flow passage 14 therethrough. The valve body 12 is typically adapted for positioning between opposed, pipe flanges (not shown). Extending outwardly from valve body 12 is a cylindrical neck portion 16 integrally formed with body 12. A flange 18 formed on neck 16 provides a means for securing an actuator (not shown) to valve 10. Diametrically opposite neck 16 and protruding from body 12 is a boss 20.

Pivotally supported in fluid passage 14 is a fluid control disk 22 having a peripheral sealing surface 23, surface 23 generally being radiused. Disk 22 is supported by means of a first stem 24 received in a bore 26 of neck 16 and a second stem 28 received in a bore 30 of boss 20. Stem 24 is keyed to disk 22 by means of pin 34 while stem 28 is keyed to disk 22 by means of pin 36.

Stem 24 is journaled in bore 26 by means of bushing 42. Fluid is prevented from escaping valve 10 through bore 26 by means of a packing gland assembly 46. The upper end 25 of stem 24 protrudes above circular flange 18 and is provided with opposed flats 48 to provide a means for securing a hand wheel, wrench or other device such as an actuator, for rotating disk 22 to open and close the valve 10.

Stem 28 is journaled in bore 30 by means of a bushing 50. Stem 28 is provided with an axially extending bore 52 at its lower end. Received in bore 52 is the shaft portion 54 of a locating member which serves to position the combination of disk 22 and shafts 24 and 28 within the body of the valve. The locating member 54 is also provided with a flange 60. A thrust washer 62 is positioned between flange 60 and boss 20. A second thrust washer 64 is positioned between the opposite side of flange 60 and a cover plate 66 which is counterbored to receive flange 60 and which is secured to boss 20 by means of bolts 68 received in suitable tapped bores in boss 20. To ensure a tight seal, a gasket (not shown) is disposed between cover plate 66 and boss 20.

Sealing between disk 22 and body 12 around the peripheral flow passage 14 is provided by means of an annular seat, shown generally as 70, and described more fully below.

Seat 70 is positioned in a first counterbore formed axially inward from a face 11 of body 12 and defined by an annular shoulder 72 and a cylindrical surface 74 which intersects annular shoulder 72, the counterbore forming a seat recess or pocket for seat member 70. Body 12 is also provided with a second counterbore which opens into the face 11 of body 12 and is defined by cylindrical surface 76 and intersecting annular shoulder 78.

When seat 70 is positioned in valve 10 in the counterbore formed by surfaces 72 and 74, an annular seat retaining plate 80 received in the counterbore defined by surfaces 76 and 78 overlays one axial face of seat 70. Retaining plate 80 is held against seat 70 by means of a locating ring 82 which is secured to body 12 by means of bolts 84. Locating ring 82 is provided with lugs 86 and 88 to enable valve 10 to be positioned between suitable pipe flanges. To this end, lugs 86 and 88 are supplied with bolt holes 90 and 92, respectively.

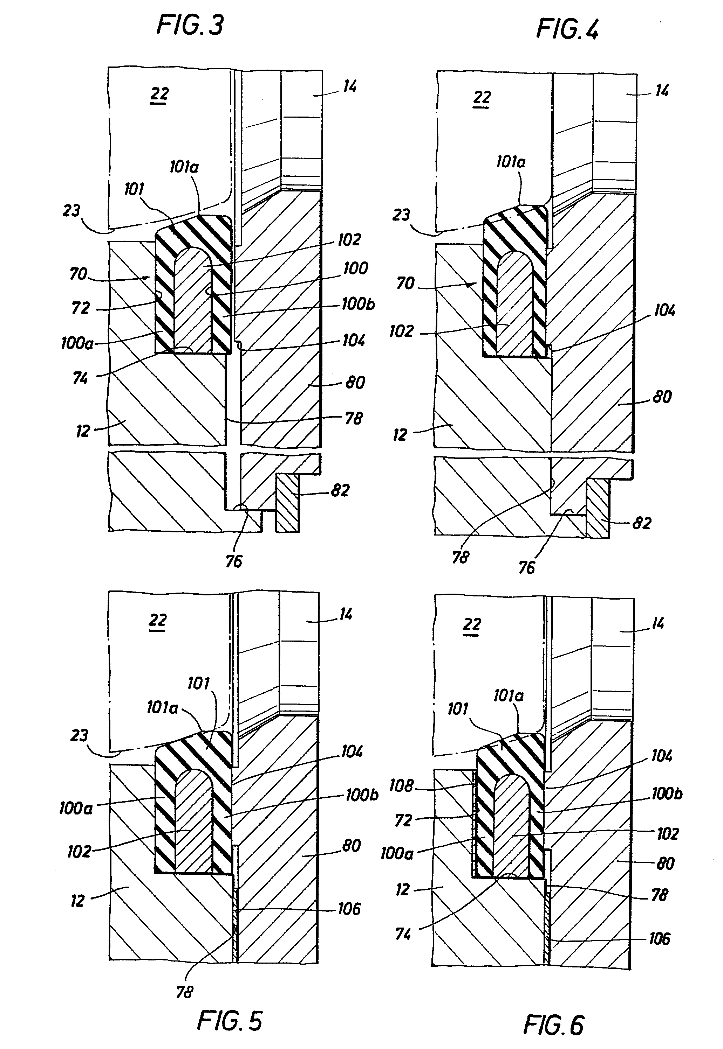

Referring now in greater detail to Figs. 3-6, it can be seen that seat 70 is comprised of an elastomeric material and is generally U-shaped in configuration having a radially outwardly opening groove 100 defined by annularly extending flanges 100a and 100b and connecting web 101. Disposed in groove 100 is a rigid annular support member 102 which preferably is of metallic construction, but which can be of any hard, substantially incompressible material such as, for example, phenolics or other thermosetting type resins. Groove 100 and support member 102 are complimentary shaped such that support member 102 substantially fills groove 100. Although seat 70 is generally an integral piece, the annular support member 102 being molded into groove 100, it will be appreciated that the elastomeric portion of seat 70 can be molded and support member 102 inserted after the molding procedure. The annularly extending web 101 provides an annularly extending seating surface 101a which, when the valve is in the closed position, sealingly engages sealing surface 23 of disk 22. As can best be seen with reference to Fig. 3, when seat 70 is under no axial compression, i.e. when it is not compressed by retaining ring 80 against abutment surface 72, surface 101a defines a circle which has a diameter which is greater than the diameter of disk 22. In other words, in the "relaxed" state when seat member 70 is under no axial compression, there is preferably no interference between the sealing surface 23 of disk 22 and the seating surface 101a of seat 70; however, it will be understood that the relative sizing of disk 22 and seat 70 may be such that there is essentially no clearance between surfaces 23 and 101a when seat 70 is in the relaxed condition providing a minimum amount of interference between the disk 22 and surface 101. Retaining ring 80 is also provided with an annularly extending upset portion 104 which, when the valve is completely assembled, engages flange 100b of seat 70 to securely clamp seat 70 between abutment surface 72 and upset portion 104.

Referring to Fig. 4, it can be seen that when the locating ring 82 is securely bolted to body 12, retaining ring 80 will be in abutment with surface 78 and hence upset portion 104 will engage seat 70. It will be appreciated that axial compression of seat 70 sufficient to result in a radially inward expansion of seat 70 results when the valve is securely clamped between pipe flanges or, in the alternative, when the locating ring 82 is provided with sufficient bolts 84 extending around the periphery of the valve to force upset portion 104 into compressive engagement with flange 100b of seat 70. Since as a practical matter the valve is always clamped between pipe flanges, locating ring 82 merely serves the purpose of holding seat 70 and retaining ring 80 in position until the valve is securely clamped between pipe flanges which act to ultimately exert the compressive force on seat 70. In any event, the axial compressive force which is exerted on seat 70, generally by pipe flanges, results in the radially inward expansion of seat 70 thereby causing seating surface 101a and sealing surface 23 to be in sealing interference with one another. It will be

0135284

appreciated that since surface 78 acts as a stop for retaining ring 80, and since the axial dimension of upset portion 104 can be predetermined, the resultant radial inward movement of seat 70 is likewise predetermined.

As disclosed in co-pending Application Serial No. 344,501, abutment surface 72 and upset portion 104 can be provided with annular serrations such that when the seat member 70 is positioned in valve 10 and secured between suitable pipe flanges, the serrations will bite into the elastomeric flanges 100a and 100b providing seat retention, sealing linkage between the outer peripheral portion of the seat 70 and valve body 12 and preventing "blowout" of the seat when the valve 10 is subjected to high pressure.

Referring now to Fig. 5, the valve is shown as having an annular spacer or shim 106 disposed between surface 78 of body 12 and retaining ring 80. Again, with locating ring 82 securely pulled against the body 12 and the valve secured between pipe flanges (not shown), seat 70 will be axially compressed, the amount of axial compression being less than that shown in Fig. 4 because of the presence of spacer 106. Accordingly, the resultant radially inward movement of seat 70 will be less than that shown in Fig. 4 with reduced disk-seat interference. Thus, while with the embodiment shown in Fig. 4, the valve may be used in high pressure environments, e.g. greater than 800 psi, the embodiment shown in Fig. 5 is more suitable for lower pressure environments, e.g. less than 400 psi. It will be recognized that with the amount of interference of disk-seat interference shown in Fig. 4, increased torque is required to rotate disk 22 relative to the torque required to rotate disk 22 in the embodiment shown in Fig. 5.

Referring now to Fig. 6, there is shown still another embodiment wherein a second annular spacer or shim 108 is disposed between abutment surface 72 and annular flange 100a of seat 70. It can be seen that if the axial thickness of shim 108 is the same as the axial thickness of shim 106, the radial inward movement of seat 70 and hence surface 101a will be the same as that shown in Fig. 4. However, the insertion of spacer 108 results in an axial shift of seat 70 away from abutment surface 72 thereby changing the contact point between disk 22 and seat 70. It will be remembered that the sealing edge 23 of disk 22 is radiused such that in the embodiment shown in Fig. 6, a disk chord having a smaller diameter than that of Fig. 4 is involved with the result being that the pressure rating of the valve is essentially the same as that of the embodiment shown in Fig. 5.

It will be readily apparent that by altering the axial thickness of upset portion 104 or by the use of various spacers, fixed, discreet steps of axial compressive force can be applied on seat 70. Note that in all cases the axial compression is limited by surface 78 which acts as a stop to limit axial movement of retaining ring 80. Accordingly, using the same seat, the valve of the present invention can be used in a high pressure environment of up to 1500 psi or a low pressure environment of less than 250 psi simply by changing, in a fixed, stepwise fashion, the amount of axial compressive force applied to the seat. It will also be apparent that with the valve structure of the present invention, the axial compressive forces applied to the elastomeric seat are uniformly distributed around the periphery of the seat ensuring even wearing and hence a longer life of the seat.

The term "elastomeric" as used herein is used to refer to a material which will deform under pressure but which, in general, is resistant to cold flow or permanent set upon application of pressure over extended periods of time. Typical elastomeric materials include natural and synthetic rubbers such as, for example, styrene-butadiene rubber, nitrile rubber, butyl rubber, neoprene, polybutadiene, etc. In addition, other elastomeric materials made from various synthetic polymers can also be used.

It is a particular feature of the valve of the present invention that without changing seat design or external configuration of the valve, a single valve seat can be used to produce a low pressure rated valve or a high pressure rated valve by changing, in stepwise, predetermined fashion, the amount of axial compression applied to the seat. In other words, the seat is capable of dual low/high pressure operation without any change to the seat configuration per se.

The valve construction of the present invention offers several distinct advantages. Since the amount of radial inward expansion of the seat can be accurately predicted on the basis of knowing the quantified amount of axial compression applied to the seat, it becomes relatively simple, in field service, to convert the valve from a high pressure valve to a low pressure valve or visa versa simply by the addition of a shim or spacer or, as the case may be, the removal of such. Thus, knowing the amount of radial inward expansion of the seat member which will occur, the maximum pressure rating of the valve can be accurately determined without the necessity for placing the valve in a test stand to determine experimentally its pressure holding capability. Additionally actuator sizing is greatly simplified. In this regard, it is to be noted that as the disk-seat interference increases, the torque required to rotate the disk also increases. However, since in the case of the valve of the present invention, the amount of disk-seat interference can be accurately predicted, the amount of torque necessary to rotate the valve seat can also be accurately predicted and hence a properly sized actuator can be selected. Again, this can be accomplished in field service without the necessity for placing the valve in an experimental environment to determine actuator sizing.

While particular embodiments of the present invention have been shown and modified, it will be apparent to those skilled in the art that minor changes and modifications may be made therein without departing from the true scope and spirit of the invention.

- 1 -

0135284

What Is Claimed Is:

1. A valve comprising:

a valve body having a flow passage therethrough and an annular seat recess in surrounding relationship to said flow passage, said seat recess having an axially facing abutment surface;

a valve closure element pivotable within said body between open and closed positions to control the flow of fluid through said flow passage, said valve closure element having a sealing surface;

an annular, elastomeric seat member having a seating surface, said seat member being positioned in said seat recess, said seat member having a generally radially outwardly opening annular groove;

a rigid, annular support member disposed in and substantially filling said groove;

annular seat retaining means removably attachable to said body, said seat member being disposed between said abutment surface and said seat retention means;

means operatively associated with said seat retaining means for applying axial compressive forces on said seat member in discreet steps, said compressive forces being substantially uniformly applied to said seat whereby a substantially uniform, predetermined radial inward movement of said seat is effected to thereby provide a predetermined degree of sealing interference between said sealing surface on said valve closure element and said seating surface on said seat member.

2. The valve of Claim 1 wherein said means operatively associated with said seat retaining means includes means for axially displacing said valve seat relative to said abutment surface.

3. The valve of Claim 1 wherein said rigid support member is metallic.

4. The valve of Claim 1 wherein said seat retention means has a first side and a second side, said first side facing said seat member, said first side including an annularly extending upset portion for engaging said seat member.

5. The valve of Claim 1 including spacer means disposed between said valve body and said seat retaining means.

6. The valve of Claim 1 including spacer means disposed between said abutment surface and said seat member.

7. The valve of Claim 1 including first spacer means disposed between said valve body and said seat retaining means and second spacer means disposed between said abutment surface and said seat member.

8. The valve of Claim 1 wherein said valve closure element comprises a disk type closure element, the diameter of said disk type closure element being less than the internal diameter of said seat member when said seat member is in a non-compressed state.

FIG.1

FIG.2

0135284

*FIG.3*

*FIG.4*

*FIG.5*

*FIG.6*